# FASCICULE DE BREVET EUROPEEN

(11) **EP 1 095 559 B1**
(45) Date de publication et mention de la délivrance du brevet: **07.04.2004**
(21) Numéro de dépôt: 00450014.6
(22) Date de dépôt: 29.09.2000
(51) Int. Cl.: A01G 1/02, A01G 13/02

(54) **Procédé de culture d'asperges et dispositif de manipulation d'un film utilisé pour la mise en oeuvre dudit procédé**
Spargelzuchtverfahren und Vorrichtung für den Einsatz einer Folie in diesem Verfahren
Method of growing asparagus and device for manipulating a film used in the referred method

(30) Priorité: 30.09.1999 FR 9912592
(43) Date de publication de la demande: 02.05.2001
(73) Titulaire: Clauss, Marc, 40120 Bourriot Bergonce (FR)
(72) Inventeur: Clauss, Marc, 40120 Bourriot Bergonce (FR)
(74) Mandataire: Thébault, Jean-Louis

(56) Documents cités:
- EP-A- 0 763 322
- FR-A- 2 618 292
- US-A- 3 701 241

## Description

La présente invention a pour objet un procédé de culture d'asperges selon le préambule de la revendication 1 visant à améliorer la productivité, ainsi qu'un dispositif de manipulation d'un film selon le préambule de la revendication 5 utilisé pour la mise en oeuvre du procédé.

L'asperge est une plante potagère de la famille des liliacées comprenant une griffe à partir de laquelle vont se développer des turions ou jeunes pousses. Les griffes sont plantées dans des sillons profonds et recouvertes d'une butte.

La cueillette, faite entièrement à la main, a lieu au printemps. L'asperge est cueillie avant de sortir de terre ou alors quand elle pointe à peine. Les cueilleurs détectent les turions par les fissures qui apparaissent sur la butte, puis à l'aide d'un outil, appelé gouge, qui s'enfonce le long de l'asperge, décollent le turion de la griffe.

Les asperges sont classées en plusieurs catégories selon leur coloration, cette dernière variant en fonction du temps d'exposition à la lumière.

Ainsi, l'asperge dite blanche est ramassée avant qu'elle ne dépasse de la surface du sol afin d'empêcher tout exposition à la lumière.

L'asperge dite violette est ramassée après une exposition à la lumière de quelques heures alors que l'asperge dite verte est ramassée après une exposition à la lumière de plus d'une journée.

L'asperge blanche qui ne voit pas la lumière est la plus prisée des consommateurs mais aussi la plus contraignante à travailler.

En effet, l'asperge blanche nécessite un ramassage fréquent, quasiment quotidien, afin de limiter les risques d'exposition à la lumière et sa coloration synonyme de déclassement.

Les autres causes de déclassement sont les tâches de rouille provoquées par la pluie ou le froid ainsi qu'une longueur inférieure à 21 cm.

Ainsi, le producteur d'asperge doit récolter les asperges quotidiennement malgré les coûts de main d'oeuvre s'il veut améliorer la productivité en limitant les produits déclassés, ces derniers étant vendus un prix nettement inférieur à l'asperge blanche.

Le brevet US-3.701.241 décrit un procédé de culture d'asperges qui consiste à faire pousser les asperges sous un tunnel réalisé à partir d'un film opaque. Pour rigidifier, le tunnel, ce dernier comprend des arceaux fixés au film, le film et les arceaux formant un ensemble indissociable. Au moment de la cueillette, l'ensemble film/arceaux est légèrement soulevé par rapport au sol de manière à laisser sur les côtés un accès libre pour un outil de coupe. Selon ce procédé, les asperges sont coupées alors que la pousse a une hauteur au dessus du sol de l'ordre d'une vingtaine de centimètres.

Même si ce procédé permet d'obtenir des asperges blanches, il ne donne pas pleinement satisfaction car les asperges cueillies sont relativement dures et filandreuses étant donné qu'elles sont coupées alors que le turion a une longueur totale au-dessous et au-dessus du sol de l'ordre d'une quarantaine de centimètres.

D'autre part, ce procédé requiert un tunnel relativement complexe et coûteux, les arceaux étant reliés au film, difficile à déplacer si on cherche à le retirer de la butte d'asperges pour autoriser l'accès à un opérateur.

Selon une autre technique de culture, pour accélérer la pousse des turions, certain producteur utilise le paillage. Cette technique consiste à placer directement sur la butte un film de polyéthylène en contact avec le sol. Ainsi, au printemps, ce film provoque un réchauffement plus rapide du sol, limite l'évaporation et empêche la croissance des mauvaises herbes. La reprise des plantes en est améliorée et leur croissance accélérée. Dans le cas de la culture d'asperge, ce film protège également les asperges de la pluie empêchant l'apparition de tâches de rouille.

L'utilisation de ce film pose toutefois le problème du débâchage/rebâchage avant et après la cueillette. Ces opérations réalisées à la main, devant être effectuées quotidiennement comme nous l'avons vu ci-dessus, demandent une grande précaution pour limiter les risques de piétinement des turions cachés sous la terre.

Aussi, la présente invention vise à pallier les inconvénients de l'art antérieur en proposant un procédé de culture d'asperges qui améliore la productivité en limitant les risques de déclassement et en réduisant les coûts de production.

A cet effet, l'invention a pour objet un procédé de culture d'asperges qui consiste à disposer au dessus des plants d'asperges un tunnel réalisé à partir d'un film opaque à la lumière qui repose sur des arceaux plantés dans le sol, ledit film étant déposé au pied des arceaux au moment de la cueillette.

De préférence, le film utilisé absorbe la chaleur pour obtenir un effet de serre.

Selon un mode de réalisation, le film est en polyéthylène et peut être lesté sur ses bords longitudinaux.

L'invention propose également un dispositif pour la manipulation d'un film utilisé pour la mise en oeuvre dudit procédé, simple, fiable et relativement peu coûteux qui facilite la manipulation dudit film sans risque d'endommagement pour les turions.

A cet effet, l'invention a pour objet un dispositif de manipulation de film, fixé ou tracté par un engin motorisé tel qu'un tracteur, caractérisé en ce qu'il comprend un châssis comportant, à l'avant, un ou plusieurs rouleaux horizontaux, disposés perpendiculairement au sens de déplacement du dispositif, à l'arrière, un "V" renversé, de préférence réalisé grâce à deux rouleaux, et des moyens de guidage susceptibles d'occuper deux positions, une première de débâchage où les deux bords longitudinaux du film glissent sur la même pente du "V" et sont disposés d'un même côté du rang d'asperges, et une seconde de rebâchage où les deux bords longitudinaux du film glissent chacun sur une pente différente du "V" et sont disposés de chaque côté du rang d'asperges.

D'autres caractéristiques et avantages ressortiront de la description qui va suivre d'un mode de mise en oeuvre du procédé et du dispositif de l'invention, description donnée à titre d'exemple uniquement et en regard des dessins annexés sur lesquels :
- la figure 1 représente une vue en coupe montrant un plant d'asperges recouvert par un film selon le procédé de culture de l'invention,
- la figure 2 représente une vue en perspective de l'arrière du dispositif de manipulation selon l'invention
- la figure 3A représente une vue de dessus du dispositif durant une phase de débâchage, et
- la figure 3B représente une vue de dessus du dispositif durant une phase de rebâchage.

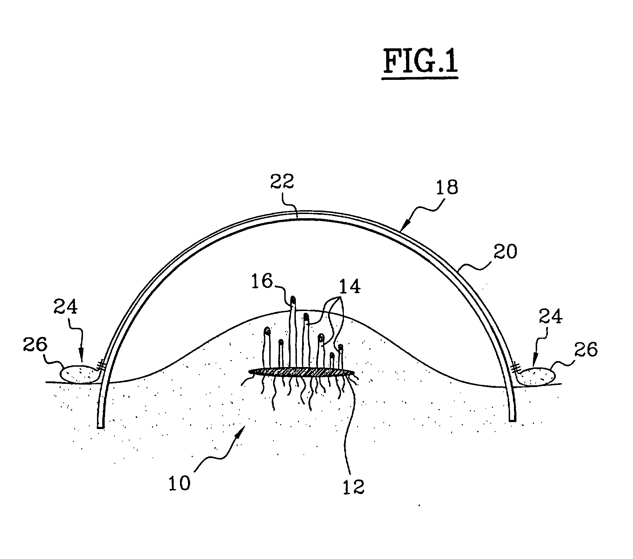

Sur la figure 1, on a représenté en coupe un plant 10 d'asperges, de préférence cultivé en butte, comprenant une griffe 12 ainsi que des turions 14 dont certains 16 dépassent du sol.

Selon l'invention, pour empêcher la coloration de l'asperge une fois sortie du sol, le procédé de culture d'asperges consiste à disposer au dessus des plants d'asperges un tunnel 18 réalisé à partir d'un film 20 opaque à la lumière posé sur des arceaux 22 plantés dans le sol.

De cette façon, même hors de terre, l'asperge reste dans l'obscurité, ce qui empêche sa coloration et son déclassement.

Ainsi, le producteur peut espacer dans le temps les cueillettes et n'est plus obligé de récolter tous les jours car même s'ils dépassent du sol, les turions protégés de la lumière restent blancs. La réduction du nombre de cueillettes permet de réduire sensiblement les coûts de revient des asperges.

De même, en empêchant la coloration des asperges, on améliore la qualité et le rendement en réduisant fortement les risques de déclassement.

Hormis le fait d'empêcher la coloration, le film permet également de protéger les turions de la pluie ou du froid, ce qui empêche l'apparition de tâches de rouille susceptibles de déclasser l'asperge et prévient l'apparition des maladies.

Contrairement au film utilisé pour la culture sous tunnel de plantes nécessitant de la lumière, le film 20 utilisé selon l'invention est parfaitement opaque à la lumière.

Avantageusement, ce film 20 peut également absorber la chaleur afin de provoquer un effet de serre qui accélère la croissance des plantes.

Selon le procédé de culture de l'invention, le film est retiré juste avant la cueillette pour limiter le temps d'exposition à la lumière, puis remis en place juste après la cueillette afin d'éviter un refroidissement trop important du sol.

Pour le débâchage, le film opaque est déposé au pied des arceaux 22 qui restent plantés au sol.

En retirant totalement le film du dessus de la butte, on autorise un accès plus large aux opérateurs qui peuvent couper aisément les turions. Contrairement à l'art antérieur, l'opérateur détecte facilement les asperges qui dépassent du sol mais qui restent blanches grâce au film opaque.

Toutefois, contrairement au brevet US-3.701.241, l'opérateur peut choisir le moment opportun pour cueillir l'asperge. De préférence, il évite si possible que les asperges dépassent trop de la surface du sol pour ne pas que ces dernières soient trop dures et filandreuses.

Ce film 20, de préférence en polyéthylène noir, s'étend sur toute la longueur du rang d'asperges et comprend des lests 24 sur ses bords longitudinaux pour maintenir le film 20 en place sur ses arceaux 22, même en cas de vent.

Selon un mode de réalisation préféré, le film 20 comporte sur chacun de ses bords longitudinaux un ourlet 26 lesté, par exemple par de la terre ou de l'eau. Selon les cas, ces ourlets peuvent s'étendre sur toute la longueur de façon continue ou discontinue.

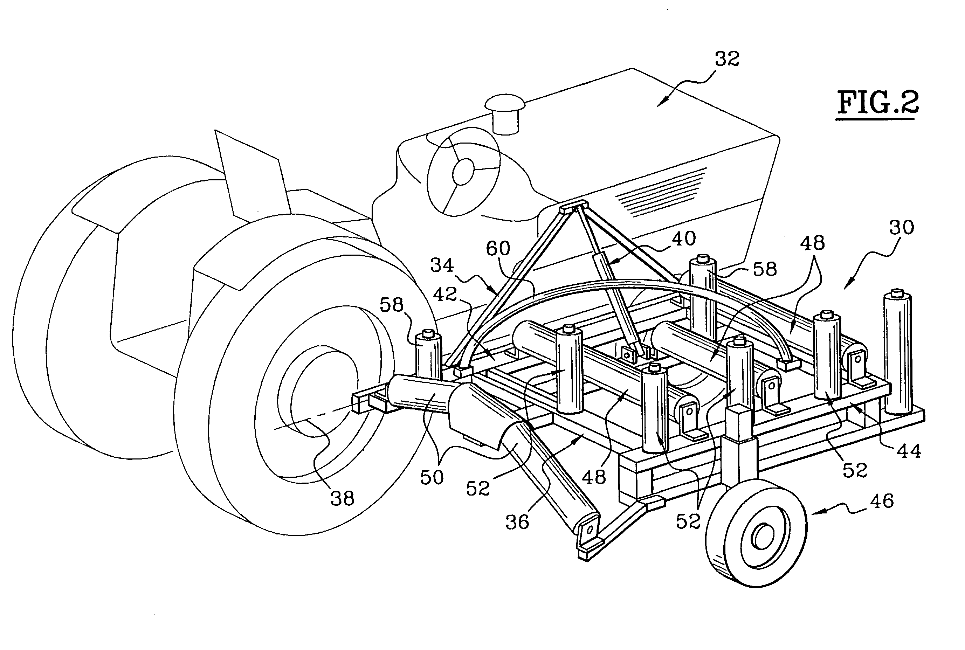

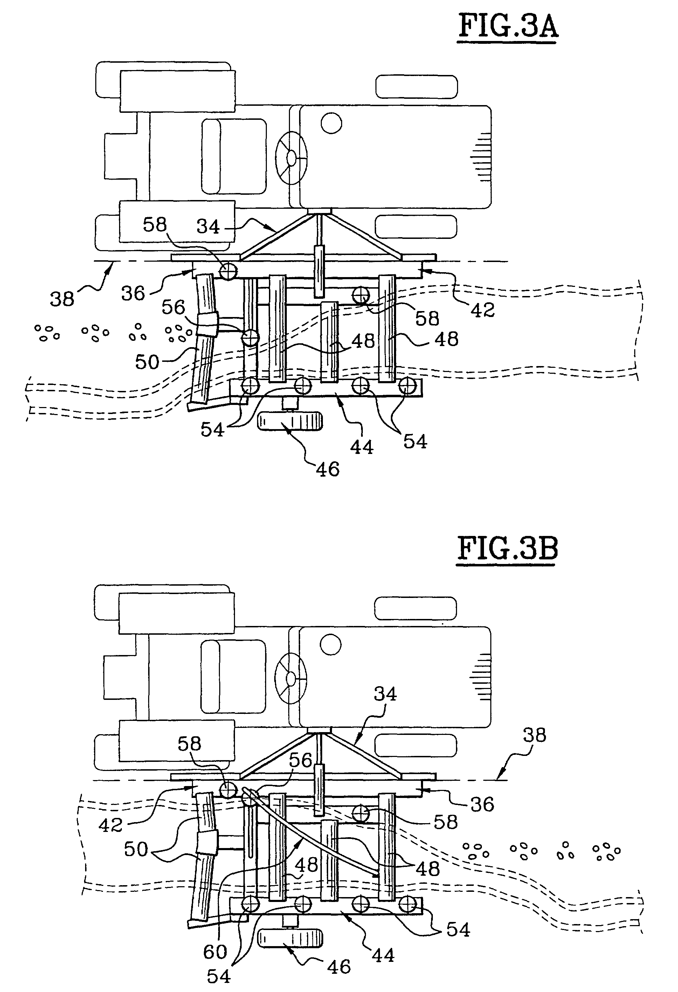

Pour faciliter le débâchage et rebachâge du film utilisé pour la mise en oeuvre du procédé de culture d'asperges, l'invention propose également un dispositif 30 de manipulation d'un film, notamment disposé sous forme de tunnel, illustré par les figures 2, 3A et 3B. Ce dispositif peut également servir pour la manipulation de tout film utilisé pour la culture de plantes, aussi bien disposé à même le sol que sous forme de tunnel.

Ce dispositif 30 peut être fixé sur le côté d'un tracteur 32 comme illustré sur la figure 2 ou bien fixé ou tracté par tout autre engin motorisé.

Selon le mode de réalisation préféré, le dispositif comprend un châssis en deux parties, une première 34, appelée attelage, solidaire du tracteur et une seconde 36, appelée châssis principal, équipée de moyens 38 d'articulation par rapport à l'attelage. Ce châssis principal 36 peut pivoter par rapport à l'attelage 34 selon un axe horizontal grâce à un actionneur 40, par exemple un vérin, et occuper deux positions, une première sensiblement horizontale au-dessus du rang d'asperges en mode d'utilisation et une seconde relevée pour la manoeuvre du dispositif en bout de rang ou durant ses déplacements hors utilisation.

Le châssis principal 36 en forme sensiblement de rectangle a une largeur sensiblement supérieure à celle d'un rang d'asperges afin qu'un premier bord longitudinal 42, articulé par rapport à l'attelage, appelé bord gauche en référence au sens de déplacement du dispositif, soit d'un côté du rang d'asperges et que le second bord longitudinal 44, bord droit, soit disposé de l'autre côté du rang d'asperges en mode d'utilisation. Avantageusement, le bord droit 44 comprend une roue de jauge folle 46 afin de soutenir le châssis principal 36 durant l'utilisation.

Ce châssis 36 comprend, à l'avant, un ou plusieurs rouleaux 48 horizontaux, disposés perpendiculairement au sens de déplacement du dispositif, à l'arrière, deux rouleaux 50 formant un "V" renversé et des moyens 52 de guidage susceptibles d'occuper deux positions, une première de débâchage, figure 3A, où les deux bords longitudinaux du film glissent sur la même pente du "V" et sont disposés d'un même côté du rang d'asperges, et une seconde de rebâchage, figure 3B, où les deux bords longitudinaux du film glissent chacun sur une pente différente du "V" et sont disposés de chaque côté du rang d'asperges.

Selon un mode de réalisation illustré par les figures 2, 3A et 3B, ces moyens 52 de guidage comprennent une première rangée de rouleaux verticaux 54 fixes, disposés au niveau du bord droit 44, plus précisément au droit d'une première extrémité du "V", et un rouleau vertical 56 mobile disposé à l'arrière, susceptible d'occuper deux positions, une première dite de débâchage, dans laquelle il est placé sensiblement au droit du sommet du "V" des rouleaux 50 et une seconde dite de rebâchage, dans laquelle il est placé sensiblement au niveau du bord gauche 42, plus précisément à la seconde extrémité du "V".

Des rouleaux auxiliaires 58 peuvent être rajoutés au niveau du bord gauche 42 afin d'assurer un meilleur guidage du film 20.

De préférence, le dispositif comprend pour le rebâchage un arceau 60 disposé en diagonale, de l'avant droit à l'arrière gauche, afin de séparer les bords longitudinaux du film 20 et de conformer ledit film en forme de tunnel en limitant le flottement. De manière générale, la première extrémité de l'arceau 60, disposée à l'avant, est sensiblement au droit du côté du rang d'asperges où est stocké le film, alors que la seconde extrémité, disposée à l'arrière, est au droit de l'autre côté du rang d'asperges.

Le fonctionnement du dispositif est maintenant expliqué au regard des figures 3A et 3B.

En mode débâchage comme illustré par la figure 3A, le rouleau vertical mobile 56 est disposé sensiblement au droit du sommet du "V". Au début du rang, l'utilisateur amorce le débâchage en soulevant le film 20, en disposant le dispositif 30 sous le film, puis en plaçant à l'arrière du dispositif les bords longitudinaux lestés du film d'un même côté du rang, vers le bord droit 44 du dispositif. Ensuite, de façon automatique, en déplaçant le dispositif au dessus du rang, ce dernier soulève à l'avant le film 20, grâce au rouleau horizontal avant 48, puis oriente le bord longitudinal gauche du film vers la pente droite du "V" renversé grâce au rouleau mobile 56. Ainsi, les deux bords longitudinaux du film sont disposés du même coté du rang, à l'occurrence du côté droit.

En mode de rebâchage illustré par la figure 3B, le rouleau mobile 56 est disposé au niveau du bord gauche et l'arceau 60 est placé au-dessus des rouleaux horizontaux 48. Au début du rang, l'utilisateur amorce le rebâchage, en soulevant le film, en disposant le dispositif 30 sous le film, puis en plaçant les bords longitudinaux de part et d'autre du rang d'asperges. Ensuite, de façon automatique, en déplaçant le dispositif au-dessus du rang, ce dernier soulève le film grâce au rouleau horizontal avant 48, sépare les bords longitudinaux du film et conforme ledit film grâce à l'arceau 60, puis dépose lesdits bords longitudinaux de part et d'autre du rang grâce aux deux pentes du "V" renversé.

Grâce au dispositif de l'invention, la manipulation du film ne nécessite pas de main d'oeuvre autre que celle du conducteur et supprime les risques de piétinement des turions cachés sous terre et de casse de ceux hors de terre.

En complément, le dispositif peut comporter un réservoir de liquide, par exemple d'eau, et des jets disposés au droit des bords longitudinaux du film afin de faire un appoint d'eau dans les ourlets. Ainsi, au moment du rebâchage, juste après que le tunnel soit de nouveau conformer, les jets pulvérisent sur chaque flanc du tunnel de l'eau qui ruisselle jusque dans l'ourlet afin de faire éventuellement un appoint pour assurer toujours un lestage suffisant.

Selon une variante améliorée, au moins un des rouleaux horizontaux est mis en rotation par une motorisation afin d'entraîner, par frottement, le film vers l'arrière du dispositif, ce qui permet de supprimer la phase d'amorçage et d'obtenir une meilleure manipulation du film. Dans ce cas, on peut prévoir un dispositif, par exemple un embrayage, pour stopper la rotation des rouleaux à l'approche de la fin du rang lorsque le lestage du film n'est plus suffisant pour le maintenir en place.

De façon équivalente, les rouleaux horizontaux peuvent être remplacés par un tapis roulant.

Bien entendu, l'invention n'est évidemment pas limitée au mode de réalisation représenté et décrit ci-dessus, mais en couvre au contraire toutes les variantes, notamment en ce qui concerne le châssis du dispositif qui peut être adaptée en fonction du mode de traction et de l'attelage utilisés.

De plus, le rouleau mobile 56 peut être déplacé manuellement ou bien grâce à un actionneur.

## Revendications

1. Procédé de culture d'asperges consistant à disposer au dessus des plants d'asperges un tunnel (18) réalisé à partir d'un film (20) opaque à la lumière, **caractérisé en ce que** ledit film (20) est posé sur des arceaux (22) plantés dans le sol, la cueillette étant réalisée après débâchage en déposant le film (20) opaque au pied des arceaux (22).

2. Procédé de culture d'asperges selon la revendication 1, **caractérisé en ce qu'**on utilise un film (20) opaque qui absorbe également la chaleur pour obtenir un effet de serre.

3. Procédé de culture d'asperges selon la revendication 1 ou 2, **caractérisé en ce qu'**on utilise un film en polyéthylène noir.

4. Procédé de culture d'asperges selon l'une quelconque des revendications 1 à 3, **caractérisé en ce qu'**on utilise un film (20) comprenant des ourlets (26) lestés sur chacun de ses bords longitudinaux.

5. Dispositif de manipulation d'un film, lesté au niveau de ses bords longitudinaux, utilisé pour la mise en oeuvre du procédé de culture selon l'une quelconque des revendications précédentes, fixé ou tracté à un engin motorisé tel qu'un tracteur, **caractérisé en ce qu'**il comprend un châssis (34, 36) comportant, à l'avant, un ou plusieurs rouleaux (48) horizontaux, disposés perpendiculairement au sens de déplacement du dispositif, à l'arrière, un "V" renversé, de préférence réalisé grâce à deux rouleaux (50), et des moyens (52) de guidage susceptibles d'occuper deux positions, une première de débâchage où les deux bords longitudinaux du film glissent sur la même pente du "V" et sont disposés d'un même côté du rang d'asperges, et une seconde de rebâchage où les deux bords longitudinaux du film glissent chacun sur une pente différente du "V" et sont disposés de chaque côté du rang d'asperges.

6. Dispositif selon la revendication 5, **caractérisé en ce que** les moyens (52) de guidage comprennent une première rangée de rouleaux verticaux (54) fixes, disposés au droit d'une première extrémité du "V", et un rouleau vertical (56) mobile disposé à l'arrière, susceptible d'occuper deux positions, une première dite de débâchage, dans laquelle il est placé sensiblement au droit du sommet du "V" et une seconde dite de rebâchage, dans laquelle il est placé sensiblement au droit de la seconde extrémité du "V".

7. Dispositif selon la revendication 5 ou 6, **caractérisé en ce qu'**il comprend pour le rebâchage un arceau (60), disposé au dessus du ou des rouleaux horizontaux (48), dont une première extrémité, disposée à l'avant, est sensiblement au droit du côté du rang d'asperges où est stocké le film, et la seconde extrémité, disposée à l'arrière, est sensiblement au droit de l'autre côté du rang d'asperges afin de conformer le film en tunnel.

8. Dispositif selon l'une quelconque des revendications 5 à 7, **caractérisé en ce que** le châssis est réalisé en deux parties, une première (34), appelée attelage, solidaire du tracteur et une seconde (36), appelée châssis principal, équipée de moyens (38) d'articulation de manière à pivoter par rapport à l'attelage (34) selon un axe horizontal et susceptible d'occuper deux positions, une première sensiblement horizontale au-dessus du rang d'asperges en mode d'utilisation et une seconde relevée pour la manoeuvre du dispositif en bout de rang ou durant ses déplacements hors utilisation.

9. Dispositif selon l'une quelconque des revendications 5 à 8, **caractérisé en ce qu'**il comporte un réservoir de liquide, par exemple d'eau, et des jets orientés vers les bords longitudinaux du film afin de faire un appoint d'eau dans les ourlets.

10. Dispositif selon l'une quelconque des revendications 5 à 9, **caractérisé en ce qu'**au moins un des rouleaux horizontaux (48) est mis en rotation grâce à une motorisation afin d'entraîner, par frottement, le film (20) vers l'arrière du dispositif.

## Claims

1. A method of cultivating asparagus consisting of disposing above the asparagus plants a tunnel (18) produced from a film (20) opaque to light, **characterised in that** said film (20) is placed on arches (22) planted in the soil, the picking being carried out after uncovering by placing the opaque film (20) at the foot of the arches (22).

2. A method of cultivating asparagus according to claim 1, **characterised in that** an opaque film (20) is used which also absorbs heat in order to obtain a greenhouse effect.

3. A method of cultivating asparagus according to claim 1 or 2, **characterised in that** a black polyethylene film is used.

4. A method of cultivating asparagus according to any one of claims 1 to 3, **characterised in that** a film (20) is used comprising hems (26) weighted on each of its longitudinal edges.

5. A device for handling a film, weighted at its longitudinal edges, used for implementing the cultivation method according to any one of the preceding claims, fixed or pulled by a motorised machine such as a tractor, **characterised in that** it comprises a chassis (34, 36) including, at the front, one or more horizontal rollers (48), disposed perpendicular to the direction of movement of the device, at the rear, an inverted V, preferably produced by means of two rollers (50), and guide means (52) able to occupy two positions, a first uncovering position in which the two longitudinal edges of the film slide over the same slope of the V and are disposed on the same side of the row of asparagus, and a second re-covering position in which the two longitudinal edges of the film each slide over a different slope of the V and are disposed on each side of the row of asparagus.

6. A device according to claim 5, **characterised in that** the guide means (52) comprise a first row of fixed vertical rollers (54) disposed in line with a first end of the V, and a movable vertical roller (56) disposed at the rear, able to occupy two positions, a first so-called uncovering position in which it is placed substantially in line with the apex of the V and a second so-called re-covering position, in which it is placed substantially aligned with the second end of the V.

7. A device according to claim 5 or 6, **characterised in that** it comprises, for re-covering, an arch (60), disposed above the horizontal roller or rollers (48), a first end of which, disposed at the front, is substantially in line with the side of the row of asparagus where the film is stored, and the second end, disposed at the rear, is substantially in line with the other side of the row of asparagus in order to shape the film as a tunnel.

8. A device according to any one of claims 5 to 7, **characterised in that** the chassis is produced in two parts, a first (34), called the coupling, fixed to the tractor, and a second (36), called the main chassis, equipped with articulation means (38) so as to be able to pivot with respect to the coupling (34) on a horizontal axis and able to occupy two positions, a first, substantially horizontal above the row of asparagus in use mode and a second, raised, for manoeuvring the device at the end of a row or during its movements out of use.

9. A device according to any one of claims 5 to 8, **characterised in that** it comprises a reservoir of liquid, for example water, and jets oriented towards the longitudinal edges of the film in order to add water in the hems.

10. A device according to any one of claims 5 to 9, **characterised in that** at least one of the horizontal rollers (48) is rotated by virtue of a motorisation in order to drive the film (20) by friction towards the rear of the device.

## Patentansprüche

1. Verfahren zum Züchten von Spargel, das darin besteht, über Spargelpflanzen einen Tunnel (18) zu errichten, der anhand einer lichtundurchlässigen Folie (20) verwirklicht ist, **dadurch gekennzeichnet, dass** die Folie (20) auf in den Boden gesteckte Bögen (22) gelegt wird, wobei das Ernten nach dem Abdecken erfolgt, indem die undurchlässige Folie (20) auf das untere Ende der Bögen (22) gelegt wird.

2. Spargelzuchtverfahren nach Anspruch 1, **dadurch gekennzeichnet, dass** eine lichtundurchlässige Folie (20) verwendet wird, die außerdem Wärme absorbiert, um eine Gewächshauswirkung zu erhalten.

3. Spargelzuchtverfahren nach Anspruch 1 oder 2, **dadurch gekennzeichnet, dass** eine Folie aus schwarzem Polyethylen verwendet wird.

4. Spargelzuchtverfahren nach einem der Ansprüche 1 bis 3, **dadurch gekennzeichnet, dass** eine Folie (20) verwendet wird, die Säume (26) aufweist, die an jedem seiner longitudinalen Ränder beschwerend wirken.

5. Vorrichtung zur Handhabung einer auf Seiten ihrer longitudinalen Ränder beschwerten Folie, die für die Ausführung des Zuchtverfahrens nach einem der vorhergehenden Ansprüche verwendet wird und an einer motorisierten Maschine wie etwa einem Traktor befestigt ist oder von diesem gezogen wird, **dadurch gekennzeichnet, dass** sie einen Rahmen (34, 36) umfasst, der vom eine oder mehrere horizontale Rollen (48), die senkrecht zur Verlagerungsrichtung der Vorrichtung angeordnet sind, hinten ein umgedrehtes "V", das vorzugsweise aus zwei Rollen (50) verwirklicht ist, und Führungsmittel (52), die zwei Stellungen einnehmen können, eine erste Abdeckstellung, in der die zwei longitudinalen Ränder des Films auf derselben Neigung des "V" gleiten und auf derselben Seite der Spargelreihe angeordnet sind, und eine zweite Wiederabdeckstellung, in der die longitudinalen Ränder des Films jeweils auf einer anderen Neigung des "V" gleiten und beiderseits der Spargelreihen angeordnet sind, umfasst.

6. Vorrichtung nach Anspruch 5, **dadurch gekennzeichnet, dass** die Führungsmittel (52) eine erste Reihe fester vertikaler Rollen (54), die am Ort eines ersten Endes des "V" angeordnet sind, und eine bewegliche vertikale Rolle (56), die dahinter angeordnet ist und zwei Stellungen einnehmen kann, eine erste sogenannte Abdeckstellung, in der sie im Wesentlichen am Ort des Scheitelpunkts des "V" angeordnet ist, und eine zweite sogenannte Wiederabdeckstellung, in der sie im Wesentlichen am Ort des zweiten Endes des "V" angeordnet ist, umfassen.

7. Vorrichtung nach Anspruch 5 oder 6, **dadurch gekennzeichnet, dass** sie zum Wiederabdecken einen Bogen (60) aufweist, der über der oder den horizontalen Rollen (48) angeordnet ist und wovon ein erstes Ende, das vom angeordnet ist, sich im Wesentlichen an jenem Ort auf der Seite der Spargelreihe befindet, wo die Folie gelagert ist, und wovon das zweite Ende, das hinten angeordnet ist, sich im Wesentlichen am Ort der anderen Seite der Spargelreihe befindet, um die Folie zu einem Tunnel zu formen.

8. Vorrichtung nach einem der Ansprüche 5 bis 7, **dadurch gekennzeichnet, dass** der Rahmen aus zwei Teilen hergestellt ist, einem ersten sogenannten Kupplungsteil (34), der mit dem Traktor fest verbunden ist, und einem zweiten sogenannten Hauptrahmenteil (36), der mit Schwenkmitteln (38) ausgerüstet ist, um in Bezug auf die Kupplung (34) um eine horizontale Achse schwenken zu können, und zwei Stellungen einnehmen kann, eine erste im Wesentlichen horizontale Stellung über der Spargelreihe in der Verwendungsbetriebsart und eine zweite angehobene Stellung für die Bewegung der Vorrichtung am Ende der Reihe oder während ihrer Bewegung außerhalb der Verwendung.

9. Vorrichtung nach einem der Ansprüche 5 bis 8, **dadurch gekennzeichnet, dass** sie einen Flüssigkeitsbehälter, beispielsweise für Wasser, und Düsen umfasst, die zu den longitudinalen Rändern der Folie gerichtet sind, um in den Säumen eine Wasserfüllung zu bilden.

10. Vorrichtung nach einem der Ansprüche 5 bis 9, **dadurch gekennzeichnet, dass** durch einen Motor wenigstens eine der horizontalen Rollen (48) in Drehung versetzt wird, um die Folie (20) durch Reibung zur Rückseite der Vorrichtung mitzunehmen.
